# EUROPEAN PATENT APPLICATION

(11) **EP 4 361 356 A1**
(43) Date of publication of application: **01.05.2024**
(21) Application number: 22827932.9
(22) Date of filing: 24.02.2022
(51) Int. Cl.: E02F 9/00, E02F 9/20, E02F 9/26, H02J 7/00, H02J 7/04, B60L 53/14

(54) **ELECTRIC WORK MACHINE AND CHARGING SYSTEM FOR ELECTRIC WORK MACHINE**

(30) Priority: 22.06.2021 JP 2021103542
(71) Applicant: KUBOTA CORPORATION, Osaka-shi, Osaka 556-8601 (JP)
(72) Inventor: TAKAKI Takahiro, Sakai-shi, Osaka 590-0823 (JP)
(74) Representative: Cabinet Beau de Loménie
(86) International application number: PCT/JP2022/007637
(87) International publication number: WO 2022/270010

(57) **Abstract**

Work performed by an electric working machine (1) after charging will be less hindered.

An electric working machine (1) includes an electric actuator (9), a battery unit (30) including a battery (31) to supply electricity to the electric actuator (9), a working device (20) to operate using a driving force from the electric actuator (9), a charging port (41) to be connected to an external fast charger (200) via a charging cable (201), a manual operator (5c) to be operated to set at least one charging parameter, and a controller (7) to change a value of electric current supplied from the fast charger (200) to the battery unit (30) according to the at least one charging parameter set via the manual operator (5c).

## Description

### Technical Field

The present invention relates to an electric working machine powered by one or more batteries and a charging system for an electric working machine.

### Background Art

Patent Literature 1 discloses an electric working machine (e.g., a hydraulic excavator) driven by electricity supplied from a rechargeable battery. In such an electric working machine, when the power remaining in the battery is low, quick charging is performed using an external fast charger.

### Citation List

### Patent Literature

PTL 1: Japanese Unexamined Patent Application Publication No. 2021-80703

### Summary of Invention

### Technical Problem

During the quick charging, large electric current (e.g., about as much as 125 A) flows from the fast charger to the battery of the electric working machine, and therefore the battery can be fully charged in a short period of time, e.g., about an hour. Thus, for example, a full charge can be achieved by quick charging during a lunch break alone, but there is concern that the battery temperature may increase due to large electric current. In some cases, if the battery reaches the preset use limit temperature when the battery is charged, a power output restriction is imposed on the electric motor to prevent or reduce the temperature rise of the battery. This is because if the battery is used at a temperature above the use limit temperature, the useful life of the battery will not be ensured. Therefore, there are cases in which, because quick charging is performed even when the battery does not need to be charged in a short period of time, work after charging is hindered.

The present invention was made in view of such problems of known techniques, and an object thereof is to reduce the likelihood that work done by the electric working machine after charging will be hindered.

### Solution to Problem

An electric working machine according to an aspect of the present invention includes an electric actuator, a battery unit including a battery to supply electricity to the electric actuator, a working device to operate using a driving force from the electric actuator, a connector to be connected to an external fast charger via a charging cable, a manual operator to be operated to set at least one charging parameter, and a controller to change a value of electric current supplied from the fast charger to the battery unit according to the at least one charging parameter set via the manual operator.

The manual operator may be operated to set the at least one charging parameter which is a command for the fast charger. The controller may output the at least one charging parameter set via the manual operator to the fast charger.

The electric working machine may further include a display. The battery unit may include a battery monitor to monitor a status of the battery. The battery monitor may determine a permissible range of the at least one charging parameter based on the status of the battery. The controller may cause the display to display the permissible range determined by the battery monitor. The manual operator may be operable to set the at least one charging parameter within the permissible range.

The electric working machine according to an aspect of the present invention may further include a display. The battery unit may include a battery monitor to monitor a status of the battery. The battery monitor may detect at least a temperature of the battery as the status of the battery. The controller may cause the display to display the at least one charging parameter set via the manual operator and the temperature of the battery detected by the battery monitor. The manual operator may be operable to change the set at least one charging parameter.

If the temperature of the battery detected by the battery monitor is equal to or above a preset temperature lower than a use limit temperature of the battery, the controller may change the at least one charging parameter set via the manual operator to a charging parameter for the temperature of the battery to decrease below the preset temperature.

The battery monitor may calculate an estimated charging time using a target charging level of the battery, a remaining charge level of the battery, the at least one charging parameter set via the manual operator, and a charging amount per unit time, the estimated charging time being a time taken for the battery to be charged to the target charging level. The controller may cause the display to display the estimated charging time.

The battery unit may include a battery monitor to monitor a status of the battery. The battery monitor may determine whether or not to stop charging the battery based on at least one of a temperature, electric current, voltage, remaining charge level, or charging time of the battery. The controller may output a charging stop request to the fast charger if the battery monitor determines to stop charging.

The electric actuator may be an electric motor. The electric working machine may further include a hydraulic pump to be driven by the electric motor to deliver hydraulic fluid, a hydraulic device to be driven by hydraulic fluid from the hydraulic pump, and a working device to be actuated by the hydraulic device. The manual operator may be operable to be used to set a motor rotational speed of the electric motor during a normal period, and used to set the at least one charging parameter during a charging period other than the normal period.

The controller may receive an operation on the manual operator as an operation to set the at least one charging parameter when the charging cable is connected to the connector, and receive the operation on the manual operator as an operation to set the motor rotational speed of the electric motor when the charging cable is not connected to the connector.

The controller may stop supply of electricity from the battery to the electric actuator while the fast charger supplies electric current to the battery unit.

The electric actuator may be an electric motor. The electric working machine may further include a hydraulic pump to be driven by the electric motor to deliver hydraulic fluid, a hydraulic device to be driven by hydraulic fluid from the hydraulic pump, a working device to be actuated by the hydraulic device, and an unloading valve switchable between a supply position in which hydraulic fluid from the hydraulic pump is supplied to the hydraulic device and a blocking position in which the hydraulic fluid from the hydraulic pump is not supplied to the hydraulic device. The controller may not supply electric current from the fast charger to the battery unit when the unloading valve is in the supply position.

The at least one charging parameter set via the manual operator may include at least one of electric current value, charging time, charging amount, or charging speed.

A charging system for an electric working machine according to an aspect of the present invention includes the electric working machine, and a fast charger to change a value of electric current supplied via the charging cable to the electric working machine according to a command from the electric working machine.

### Advantageous Effects of Invention

With the above configuration, since the operator can set appropriate charging parameter(s) corresponding to the state and the manner in which an electric working machine is used, it is possible to reduce the likelihood that work done by the electric working machine after charging will be hindered.

### Brief Description of Drawings

[FIG. 1] FIG. 1 is an electric block diagram of an electric working machine.
[FIG. 2] FIG. 2 illustrates an example of the manner in which the electric working machine and an external charger are connected by a charging cable for charging.
[FIG. 3A] FIG. 3A illustrates an example of an operating switch.
[FIG. 3B] FIG. 3B illustrates an example of an operating switch according to variation 2.
[FIG. 4] FIG. 4 is a hydraulic circuit diagram of an electric working machine
[FIG. 5] FIG. 5 is a layout in a machine body of the electric working machine.
[FIG. 6A] FIG. 6A illustrates an example of a display screen on a display.
[FIG. 6B] FIG. 6B illustrates an example of a display screen on a display.
[FIG. 6C] FIG. 6C illustrates an example of a display screen on a display.
[FIG. 6D] FIG. 6D illustrates an example of a display screen on a display.
[FIG. 7A] FIG. 7A is a flowchart showing an example of a charging start process performed on an electric working machine using an external charger.
[FIG. 7B] FIG. 7B is a flowchart showing an example of charging control performed on an electric working machine.
[FIG. 8] FIG. 8 is an electric block diagram of an electric working machine according to variation 3.
[FIG. 9] FIG. 9 is a general side view of an electric working machine.

### Description of Embodiments

Embodiments of the present invention will be described below with reference to the drawings.

First, an overall configuration of an electric working machine 1 is described.

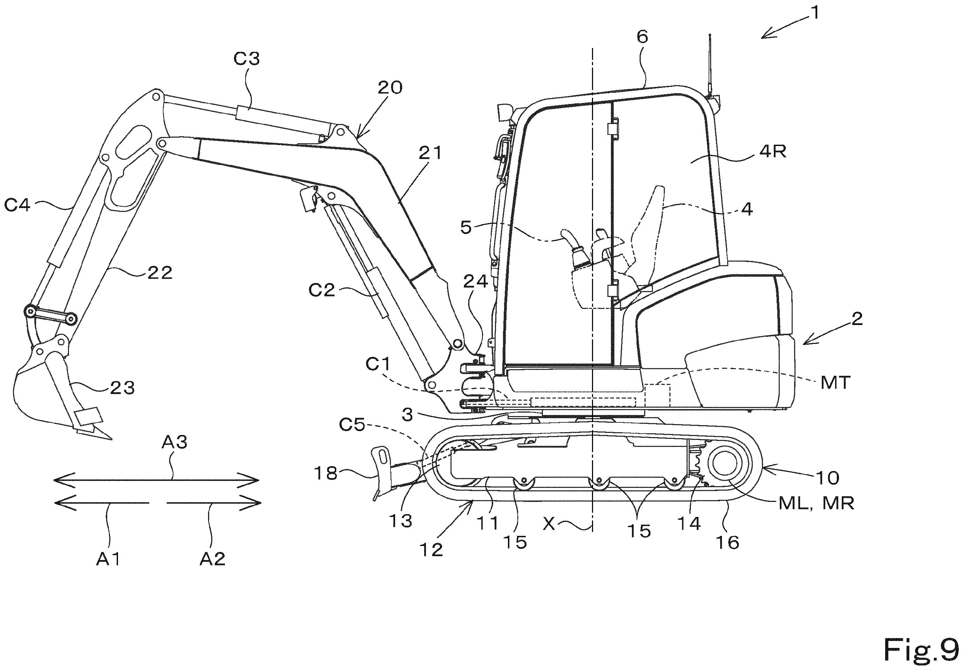

FIG. 9 is a general side view of the electric working machine 1.

The electric working machine 1 is a backhoe. The electric working machine 1 includes a machine body (swivel base) 2, a traveling device 10, a working device 20, and the like. The machine body 2 is provided, thereon, with an operator's seat 4 on which an operator is to be seated, and a protection structure 6 that protects the operator's seat 4 from front, back, left, right, and above.

The protection structure 6 is also called a cabin. The protection structure 6 includes a frame attached to the machine body 2, a roof attached to an upper portion of the frame, and a plurality of side walls attached to the front, rear, and left and right sides of the frame, respectively (details not shown). Each side wall includes a transparent portion (so-called window) that allows the surroundings to be seen from the operator's seat 4. Such a protection structure 6 divides the space around the operator's seat 4 from the outside. That is, the protection structure 6 defines an operator cab 4R including the operator's seat 4.

There is an operating device 5 to operate the electric working machine 1 in the vicinity of the operator's seat 4 inside the protection structure 6 (operator cab 4R). The operator can operate the operating device 5 while seated in the operator's seat 4.

Note that, in the present embodiment, the direction in which the operator seated in the operator's seat 4 faces (direction of arrow A1 in FIG. 9) is referred to as forward, and the opposite direction (direction of arrow A2 in FIG. 9) is referred to as backward. Furthermore, with the operator seated in the operator's seat 4 and facing in the forward direction A1, the leftward direction from the operator is referred to as leftward and the rightward direction from the operator is referred to as rightward. A horizontal direction orthogonal to a front-back direction A3 of the electric working machine 1 is referred to as a vehicle body width direction.

The traveling device 10 causes the machine body 2 to travel, and includes a travel frame 11 and a travel mechanism 12. The travel frame (truck frame) 11 is a structure to have the travel mechanism 12 attached therearound and support the machine body 2 thereon.

The travel mechanism 12 is, for example, a crawler travel mechanism. A plurality of the travel mechanisms 12 are provided on the left and right sides of the travel frame 11, respectively. Each travel mechanism 12 includes an idler 13, a drive wheel 14, a plurality of rolling wheels 15, an endless crawler belt 16, and a travel motor (left travel motor ML, right travel motor MR).

The idler 13 is located at a front portion of the travel frame 11. The drive wheel 14 is located at a rear portion of the travel frame 11. The plurality of rolling wheels 15 are provided between the idler 13 and the drive wheel 14. The crawler belt 16 is wound over the idler 13, the drive wheel 14, and the rolling wheels 15.

The left travel motor ML is included in the travel mechanism 12 on the left side of the travel frame 11. The right travel motor MR is included in the travel mechanism 12 on the right side of the travel frame 11. The left travel motor ML and the right travel motor MR are hydraulic motors. In each travel mechanism 12, power from the left travel motor ML or the right travel motor MR drives the drive wheel 14 to rotate and drives the crawler belt 16 in a circumferential motion.

A dozer device 18 is provided at the front portion of the traveling device 10. The dozer device 18 is pivoted up and down by the extension and retraction of a hydraulic actuator C5 (dozer cylinder). The hydraulic actuator C5 (dozer cylinder) is attached to the travel frame 11. The hydraulic actuator C5 (dozer cylinder) is a hydraulic cylinder.

The machine body 2 is supported on the travel frame 11 via a swivel bearing 3 such that the machine body 2 is rotatable about a swivel axis X. A swivel motor MT is provided inside the machine body 2. The swivel motor MT is a hydraulic motor (hydraulic actuator included in a hydraulic device M). The machine body 2 is rotated about the swivel axis X by power from the swivel motor MT.

The working device 20 is supported at the front portion of the machine body 2. The working device 20 includes a boom 21, an arm 22, a bucket (working tool) 23, and hydraulic actuators C1 to C5. The proximal portion of the boom 21 is pivotally attached to a swing bracket 24 such that the boom 21 is swingable about a lateral axis (an axis extending in the width direction of the machine body 2). Therefore, the boom 21 is swingable up and down (in the vertical direction). The arm 22 is pivotally attached to the distal portion of the boom 21 such that the arm 22 is swingable about a lateral axis. Therefore, the arm 22 is swingable back and forth or up and down. The bucket 23 is provided at the distal portion of the arm 22 such that the bucket 23 is capable of shoveling and dumping.

The electric working machine 1 can have attached thereto another working tool (hydraulic attachment) which can be driven by a hydraulic actuator, instead of or in addition to the bucket 23. Examples of the other working tool include hydraulic breakers, hydraulic crushers, angle brooms, earth augers, pallet forks, sweepers, mowers, and snow blowers.

The swing bracket 24 swings to the left and right upon extension and retraction of the hydraulic actuator C1 (swing cylinder) provided in the machine body 2. The boom 21 swings up and down (back and forth) upon extension and retraction of the hydraulic actuator C2 (boom cylinder). The arm 22 swings up and down (back and forth) upon extension and retraction of the hydraulic actuator C3 (arm cylinder). The bucket 23 performs shoveling and dumping upon extension and retraction of the hydraulic actuator C4 (bucket cylinder, or working tool cylinder). The hydraulic actuator C1 (swing cylinder), the hydraulic actuator C2 (boom cylinder), the hydraulic actuator C3 (arm cylinder), and the hydraulic actuator C4 (bucket cylinder) are hydraulic cylinders.

The electric working machine 1 performs work using the above-described traveling device 10 including the travel motors (left travel motors ML and right travel motor MR) and the hydraulic actuator C5, the working device 20 including the hydraulic actuators C1 to C4, the swivel motor MT, and/or the like. The travel motors (left travel motor ML and right travel moto MR), the swivel motor MT, and the hydraulic actuators C1 to C5 are included in the hydraulic device M. The traveling device 10 is also a working device which is included in the electric working machine 1.

Next, an electrical configuration of the electric working machine 1 is described.

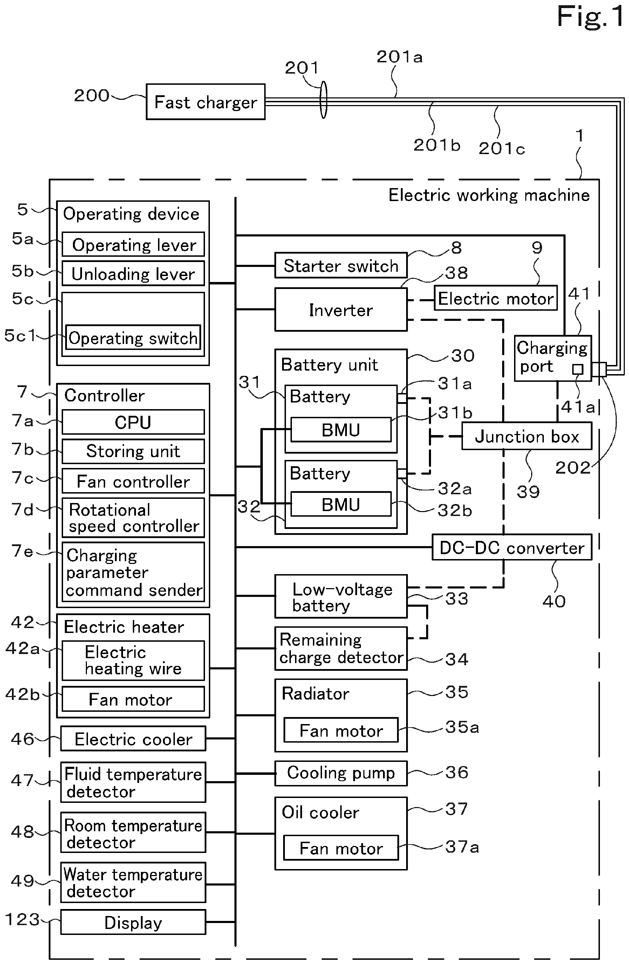

FIG. 1 is an electrical block diagram of the electric working machine 1. A charging system S includes the electric working machine 1 and an external fast charger 200. FIG. 1 illustrates the electric working machine 1 connected to the fast charger 200 via a charging cable 201.

The operating device 5 of the electric working machine 1 includes operating lever(s) 5a and an unloading lever 5b. The operating lever 5a and the unloading lever 5b can be operated by the operator seated in the operator's seat 4. The operating device 5 also includes a manual operator 5c.

A controller 7 is located inside the machine body 2 or the protection structure 6 and includes a CPU 7a and a storing unit (memory and/or storage) 7b. The CPU 7a controls the operation of elements of the electric working machine 1 (electric motor 9, battery unit 30, inverter 38, each device, and/or the like) as shown in FIG. 1. The storing unit 7b includes one or more memories and/or the like. Information, data, and program(s) (e.g., control program(s)) for the CPU 7a to control the operation of the elements are stored in the storing unit 7b in a read-write format.

A starter switch 8 is located inside the protection structure 6 and can be operated by the operator seated in the operator's seat 4. The starter switch 8 is operated by the operator to start and stop the electric working machine 1. Specifically, when the starter switch 8 is turned on, the controller 7 starts up elements of the electric working machine 1. When the starter switch 8 is turned off, the controller 7 stops the elements of the electric working machine 1.

The electric motor 9 is a drive for the electric working machine 1, which is, for example, a permanent magnet embedded three-phase AC synchronous motor. The inverter 38 is a motor drive to drive the electric motor 9. The inverter 38 is connected to the electric motor 9 and a junction box 39.

The junction box 39 is connected to the inverter 38 as well as to a battery unit 30, a DC-DC converter 40, and a charging port 41. The junction box 39 outputs electricity outputted from the battery unit 30 to the inverter 38 and DC-DC converter 40.

The inverter 38 converts direct current (DC) electricity inputted from the battery unit 30 via the junction box 39 into three-phase alternating current (AC) electricity and supplies the three-phase AC electricity to the electric motor 9. With this, the electric motor 9 is driven. The inverter 38 can adjust the electric current and voltage of the electricity supplied to the electric motor 9 as appropriate. The controller 7 controls the operation of the inverter 38 to drive or stop the electric motor 9.

The DC-DC converter 40 is a voltage converter that converts the DC voltage inputted from the battery unit 30 via the junction box 39 into a different voltage. In the present embodiment, the DC-DC converter 40 is a step-down converter that converts the high voltage of the battery unit 30 to a predetermined low voltage corresponding to electrical component(s) in the electric working machine 1. The DC-DC converter 40 supplies electricity to a low-voltage battery 33 after voltage conversion. The above electrical component(s) includes, for example, the controller 7, fan motors 35a, 37a, and 42b and other equipment (such as a connection detector 41a, an electric heater 42, an electric cooler 46, a fluid temperature detector 47, a room temperature detector 48, a water temperature detector 49, and a display 123) which are described later.

The charging port 41 (connector) can be connected to the charging cable 201. For example, the charging port 41 is a receptacle (receiving connector) into which a connector 202 of the charging cable 201 is fitted, and includes a connection detector 41a. The charging port 41 is connected to the external fast charger 200 via the charging cable 201. The connection detector 41a includes a sensor and/or the like that detects that the charging cable 201 is connected to the charging port 41 and thus the external fast charger 200 is connected.

The external fast charger 200 is capable of outputting large electric current (e.g., as much as about 125 amperes (A)), and has a power output of, for example, 125 A × 500 volts (V). Note that the fast charger 200 is not limited to those with the power output described above, but may be a charger with a power output of 400 A × 1000 V, for example.

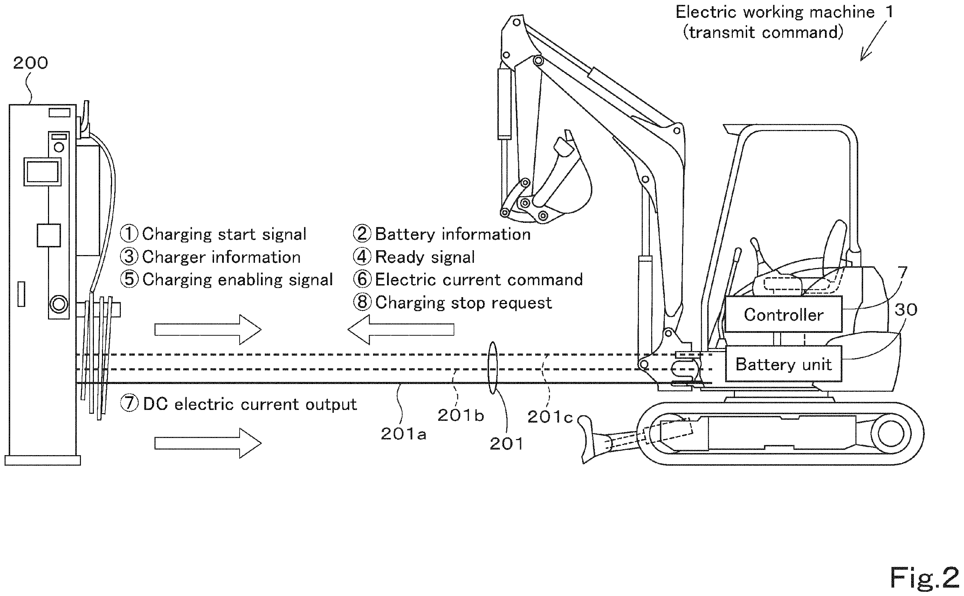

As illustrated in FIG. 2, when the electric working machine 1 and the fast charger 200 are connected together by the charging cable 201, for example, charging is performed using a known charging communication standard. In the present embodiment, the case in which charging is performed using, for example, CHAdeMO (registered trademark) charging communication standard is described. The charging cable 201 includes an electric power line 201a, a controller area network (CAN) signal line 201b, and an analog line 201c.

For example, the fast charger 200 transmits a charging start signal to the electric working machine 1 via the analog line 201c. The electric working machine 1 transmits battery information to the fast charger 200 via the CAN signal line 201b. The fast charger 200 transmits charger information (operating status) of the fast charger 200 to the electric working machine 1 via the CAN signal line 201b. The electric working machine 1 transmits a ready signal to the fast charger 200 via the analog line 201c. The fast charger 200 transmits a charging enabling signal to the electric working machine 1 via the analog line 201c. The electric working machine 1 transmits charging parameter(s) (electric current command) to the fast charger 200 via the CAN signal line 201b at predetermined intervals (e.g., every 100 ms). The fast charger 200 outputs DC electric current according to the charging parameter(s) (electric current command) to the battery unit 30 of the electric working machine 1 via the electric power line 201a. The electric working machine 1 transmits a charging stop request to the fast charger 200 via the analog line 201c for the completion of charging or abnormal termination. Note that the charging communication standard is not limited to CHAdeMO (registered trademark), but other charging methods based on other charging communication standards may be used.

The junction box 39 outputs the electricity inputted from the external fast charger 200 through the charging cable 201 and the charging port 41 to the battery unit 30. The battery unit 30 is charged with the electricity inputted from the charging port 41 through the junction box 39.

The battery unit 30 includes a plurality of batteries 31 and 32. Each of the batteries 31 and 32 is a secondary battery (storage battery), such as a lithium-ion battery, including at least one battery cell. If each of the batteries 31 and 32 includes multiple battery cells, the multiple battery cells are electrically connected in series and/or parallel. Each of the batteries 31 and 32 includes a plurality of internal cells, which are electrically connected in series and/or parallel. Each of the batteries 31 and 32 has an electrical capacity to operate element(s) of the electric working machine 1 for a given amount of time. The batteries 31 and 32 are connected in parallel with each other.

In the present embodiment, the battery unit 30 includes two batteries 31 and 32, but the number of the batteries in the battery unit 30 is not limited to two, but can be one, three or more.

The batteries 31 and 32 include respective connection switchers 31a and 32a. Each of the connection switchers 31a and 32a includes a relay, a switch, and/or the like, for example, and can switch between a connected state and a disconnected state.

The controller 7 switches one of the connection switchers 31a and 32a to the connected state and the other to the disconnected state, thus outputting electricity from one of the batteries 31 and 32 to the junction box 39 and stopping the output of electricity from the other. In other words, the controller 7 controls output of electricity from the batteries 31 and 32 and controls the stop of output of electricity from the batteries 31 and 32.

The controller 7 also switches the connection state inside the junction box 39 to connect or disconnect the inverter 38, the DC-DC converter 40, and/or the charging port 41 to or from each of the batteries 31 and 32. The junction box 39 and the connection switchers 31a and 32a are connection switchers that switch between connection and disconnection of the inverter 38, the DC-DC converter 40, and the charging port 41 to and from each of the batteries 31 and 32.

The batteries 31 and 32 include respective battery management units (BMU; battery monitors) 31b and 32b. In FIG. 1, the BMUs 31b and 32b are located within the corresponding the batteries 31 and 32, but may be located outside the batteries 31 and 32.

The BMU 31b monitors and controls the corresponding battery 31. The BMU 32b monitors and controls the corresponding battery 32. Specifically, the BMUs 31b and 32b control the opening and closing of relays inside the batteries 31 and 32 to control the start and stop of electricity supply from the batteries 31 and 32 to the junction box 39. Furthermore, the BMUs 31b and 32b monitor the status of the batteries 31 and 32. For example, the BMUs 31b and 32b detect the temperature, voltage, electric current, terminal voltage across internal cell(s), and/or like of the batteries 31 and 32.

In addition, the BMUs 31b and 32b detect the remaining charge level of the batteries 31 and 32 by a voltage measurement method based on the terminal voltage across the cell(s) inside the batteries 31 and 32, for example. Note that the method of detecting the remaining charge level of the batteries 31 and 32 is not limited to voltage measurement, but may be other methods such as coulomb counting, battery cell modeling, impedance tracking, or the like. A remaining charge detector 34, which detects the remaining charge level in the batteries 31 and 32, may be provided separately from the BMUs 31b and 32b.

Note that in the present embodiment, the electric working machine 1 includes two BMUs 31b and 32b, but the electric working machine 1 may include only one BMU 31b. In such a case, one BMU 31b monitors and controls both the batteries 31 and 32.

The low-voltage battery 33 is a lower voltage storage battery than the battery unit 30. The low-voltage battery 33 is charged with electricity supplied from the DC-DC converter 40. Th low-voltage battery 33 supplies electricity to electrical component(s) in the electric working machine 1. The remaining charge detector 34 is an electrical circuit that detects the remaining charge level of the low-voltage battery 33.

The radiator 35 cools coolant for high-heat generating electric equipment such as the electric motor 9, the inverter 38, the DC-DC converter 40, and the battery unit 30. The high-heat-generating electric equipment is electric equipment that, by operating on electricity, generates more heat than other electric equipment in the electric working machine 1. The coolant is not water alone, but is a liquid that does not freeze even in cold weather, for example.

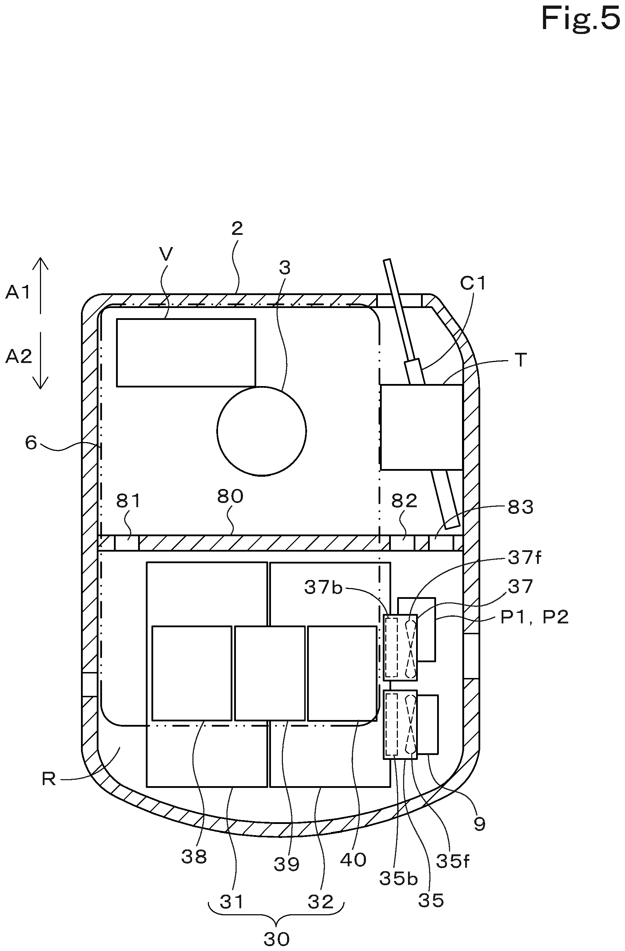

The radiator 35 includes a fan motor 35a, as well as a radiator fan 35f rotated and driven by power from the fan motor 35a and a heat exchanger 35b (shown in FIG. 5 later). The fan motor 35a is driven by electricity from the low-voltage battery 33.

A cooling pump 36 is provided in a coolant passage (not illustrated) located in the machine body 2, together with the radiator 35 and the high-heat-generating electric equipment mentioned above. The cooling pump 36 allows coolant to be discharged into and circulate through the coolant passage.

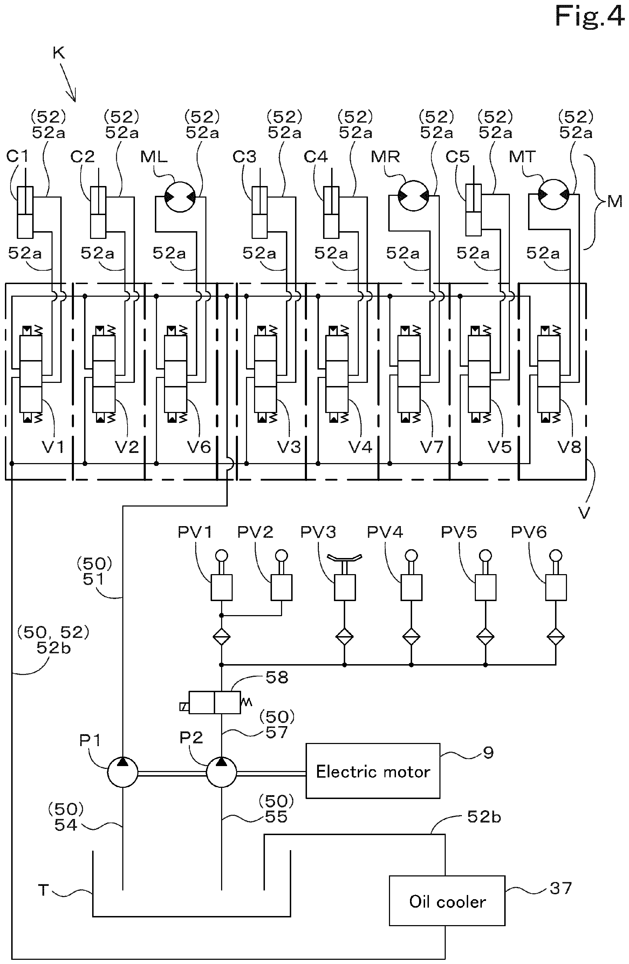

An oil cooler 37 cools hydraulic fluid having passed through the hydraulic devices such as the aforementioned travel motors (left travel motor ML and right travel motor MR), swivel motor MT, and hydraulic actuators C1 to C5, hydraulic pumps P1, P2 and a control valve unit V (illustrated in FIG. 4, etc.) which will be described later, and/or the like. The oil cooler 37 includes a fan motor 37a, as well as an oil cooler fan 37f rotated and driven by power from the fan motor 37a and a heat exchanger 37b (shown in FIG. 5 later). The fan motor 37a is driven by electricity from the low-voltage battery 33.

The electric heater 42 is driven by electricity from the low-voltage battery 33 to heat the interior of the protection structure 6. The electric heater 42 is an electric heater and includes electric heating wire(s) 42a, a fan motor 42b, and a heating fan (not illustrated). The electric heating wire 42a emits high heat when energized. The fan motor 42b rotates and drives the heating fan. The heating fan blows ambient air heated by the electric heating wire 42a toward the interior of the protection structure 6. The fan motor 42b is driven by electricity from the low-voltage battery 33.

The electric cooler 46 includes, for example, an air conditioner. The electric cooler 46 is driven by electricity from the low-voltage battery 33 to cool the interior of the protection structure 6. The electric heater 42 and the electric cooler 46 are air conditioning units that provide air conditioning inside the protection structure 6.

The fluid temperature detector 47 is a sensor that detects the temperature (fluid temperature) of hydraulic fluid. The room temperature detector 48 is a sensor that detects the temperature (room temperature) inside the protection structure 6. The water temperature detector 49 is a sensor that detects the temperature (water temperature) of coolant.

The controller 7 includes a fan controller 7c. The fan controller 7c controls the drive of the fan motor 35a of the radiator 35. For example, the fan controller 7c controls the drive of the fan motor 35a of the radiator 35 so that the temperature of the coolant does not exceed a set temperature, based on the temperature of the coolant detected by the water temperature detector 49 and on a preset control map. If the temperature of hydraulic fluid detected by the fluid temperature detector 47 is below a predetermined value, the fan controller 7c stops the drive of the fan motor 37a of the oil cooler 37, and if the temperature of hydraulic fluid detected by the fluid temperature detector 47 is equal to or above the predetermined value, the fan controller 7c, based on a preset control map, controls the temperature of the hydraulic fluid so that the temperature does not exceed the set temperature.

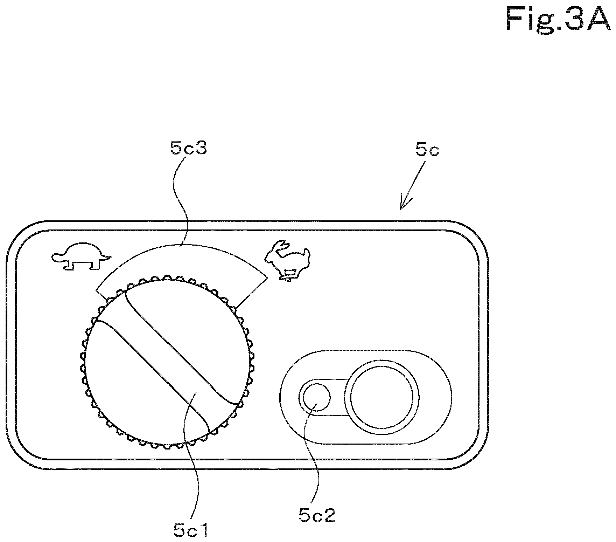

As shown in FIG. 3A, the manual operator 5c includes an operating switch 5c1 used during a normal period to set the motor rotational speed of the electric motor 9. The operating switch 5c1 is, for example, a rotational speed operating actuator and can receive, as a set value from the operator, any value within the range of the motor rotational speed of the electric motor 9 (e.g., 1500 to 2600 rpm). For example, if the operating switch 5c1 indicates the position of the tortoise symbol, the motor rotational speed is at its minimum value (e.g., 1500 rpm), and if the operating switch 5c1 indicates the position of the rabbit symbol, the motor rotational speed is at its maximum value (e.g., 2600 rpm).

The controller 7 receives the operation on the manual operator 5c (e.g., operating switch 5c1) as the operation to set the motor rotational speed of the electric motor 9 when the charging cable 201 is not connected to the charging port 41. The controller 7 includes a rotational speed controller 7d. The rotational speed controller 7d controls the rotation of the electric motor 9 at the motor rotational speed set via the operating switch 5c1.

The operating switch 5cl can be used to set charging parameter(s) during a charging period other than the normal period. Specifically, the controller 7 receives the operation on the manual operator 5c (e.g., operating switch 5c1) as the operation to set the charging parameter(s) when the charging cable 201 is connected to the charging port 41. The charging parameter(s) includes at least one of electric current value, charging time, charging amount, or charging speed.

As described above, the operating switch 5c1 makes it possible to, during the normal period, set the motor rotational speed of the electric motor 9, and, during the charging period, set the charging parameter. As illustrated in FIG. 3A, the manual operator 5c includes an indicator 5c2. The indicator 5c2 is, for example, a light-emitting diode, which turns off during the normal period (when setting the motor rotational speed) and turns on during the charging period (when setting the charging parameter). Note that the indicator 5c2 may turn on during the normal period (when setting the motor rotational speed) and turn off during the charging period (when setting the charging parameter). The indicator 5c2 may be a text indicator that indicates the operating status such as "normal state" or "charging state". The manual operator 5c includes an indicator 5c3. The indicator 5c3 is an indicator of the operating position of the operating switch 5c1. The indicator 5c3, for example, includes unit markings which are segments of the range from the minimum value to the maximum value. The unit markings from the minimum value to the operating position of the operating switch 5c1 are illuminated.

The controller 7 changes the value of electric current supplied from the fast charger 200 to the battery unit 30 using the charging parameter set via the manual operator 5c (e.g., operating switch 5c1). Specifically, the controller 7 includes a charging parameter command sender 7e to output, during the charging period, the charging parameter set via the operating switch 5c1 to the external fast charger 200 through the charging cable 201. The external fast charger 200 changes the value of electric current (DC electric current output) to be supplied to the battery unit 30 of the electric working machine 1 based on the charging parameter sent from the charging parameter command sender 7e.

Since the BMU 31b and the BMU 32b have the same configuration, the BMU 31b will be described and the description for the BMU 32b will be omitted. That is, the configuration including the BMU 31b, the controller 7, and the battery 31 described below is equivalent to the configuration including the BMU 32b, the controller 7, and the battery 32.

The BMU 31b is capable of deciding the permissible range of the charging parameter based on the status of the battery 31 (e.g., the temperature of the battery 31). For example, in the case where the charging parameter is electric current value, the BMU 31b sets the charging parameter to a first value (for example, an electric current value of 50 A) if the temperature of the battery 31 is a first temperature (e.g., low temperature) sufficiently lower than the use limit temperature of the battery 31 (the preset temperature at and above which the charging electric current value and/or output electric current value need(s) to be suppressed to prevent or reduce a temperature rise of the battery 31), and sets the permissible range to a first permissible range with the first value being the upper limit. If the temperature of the battery 31 is a second temperature (e.g., medium temperature) lower than the use limit temperature of the battery 31 but higher than the first temperature, then the BMU 31b sets the charging parameter to a second value (for example, an electric current value of 30 A) and sets the permissible range to a second permissible range with the second value being the upper limit. The number of the permissible ranges for the charging parameter is not limited to two, but may be three or more. The first and second values are not limited to the above values. For example, the first value may be about 120 A and the second value may be about 80 A, as long as the values satisfy the relationship "the first value for the first permissible range > the second value for the second permissible range (the same applies below). Thus, the BMU 31b is capable of deciding the permissible range for the charging parameter based on the status of the battery 31 (e.g., the temperature of the battery 1). In other words, instead of causing the BMU 31b to perform uniform charging using the maximum electric current of the fast charger 200 (e.g., 125 A), it is possible to cause the BMU 31b to adjust the value of electric current outputted from the fast charger 200 appropriately.

In a case that the charging parameter is charging time, if the temperature of the battery 31 is the first temperature, the BMU 31b sets the charging parameter to a first value (e.g., 60 minutes) and sets the permissible range to a first permissible range with the first value being the upper limit, and if the temperature of the battery 31 is the second temperature, the BMU 31b sets the charging parameter to a second value (e.g., 30 minutes) and sets the permissible range to a second permissible range with the second value being the upper limit. In a case that the charging parameter is charging amount, if the temperature of the battery 31 is the first temperature, the BMU 31b sets the charging parameter to a first value (for example, the charging amount per unit time is 80%), and sets the permissible range to a first permissible range with the first value being the upper limit. If the temperature of the battery 31 is the second temperature, the BMU 31b sets the charging parameter to a second value (for example, the charging amount per unit time is 40%) and sets the permissible range to a second permissible range with the second value being the upper limit. In a case that the charging parameter is charging speed, if the temperature of the battery 31 is the first temperature, the BMU 31b sets the charging parameter to a first value (e.g., high speed) and sets the permissible range to a first permissible range with the first value being the upper limit. If the temperature of the battery 31 is the second temperature, the BMU 31b sets the charging parameter to a second value (e.g., medium speed) and sets the permissible range to a second permissible range with the second value being the upper limit.

The controller 7 is capable of causing the display 123 to display the permissible range decided by the BMU 31b, and, if the charging parameter set via the operating switch 5c1 is included in the permissible range, outputting the charging parameter to the fast charger 200, and if the charging parameter is not included in the permissible range, not outputting the charging parameter and causing the display 123 to display a prompt to set the charging parameter again.

The controller 7 causes the display 123 to display the charging parameter set via the operating switch 5c1 and the temperature of the battery 31 detected by the BMU 31b. The operating switch 5c1 can be used to set a changed charging parameter. The controller 7 (e.g., the charging parameter command sender 7e) outputs the changed charging parameter to the fast charger 200 through the charging cable 201 when the changed charging parameter is set via the operating switch 5c1.

If the value of the temperature of the battery 31 detected by the BMU 31b is equal to or higher than a preset temperature that is lower than the use limit temperature of the battery 31, the controller 7 changes the charging parameter set via the operating switch 5c1 to a changed charging parameter for the temperature of the battery 31 to decrease below the preset temperature. The charging parameter command sender 7e outputs the changed charging parameter to the fast charger 200 through the charging cable 201.

The BMU 31b calculates estimated charging time using the target charging level of the battery 31, the remaining charge level of the battery 31, the charging parameter(s) set via the operating switch 5c1, and the charging amount per unit time. The estimated charging time is the time taken for the battery to be charged to the target charging level. The controller 7 causes the display 123 to display the estimated charging time.

The BMU 31b determines whether or not to stop charging the battery 31 based on at least one of the temperature, electric current, voltage, remaining charge level, or charging time of the battery 31. The controller 7 (e.g., the charging parameter command sender 7e) outputs a charging stop request to the fast charger 200 if the BMU 31b determines to stop charging.

Next, the following description discusses a hydraulic circuit of the electric working machine 1.

FIG. 4 shows a hydraulic circuit K of the electric working machine 1.

The hydraulic circuit K includes hydraulic devices including the hydraulic actuators C1 to C5, the travel motors (left travel motor ML and right travel motor MR), the swivel motor MT, the control valve unit V, the hydraulic pumps P1 and P2, a hydraulic fluid tank T, the oil cooler 37, operating valves PV1 to PV6, an unloading valve 58, a fluid passage 50, and/or the like.

The hydraulic pump P1 is a hydraulic pump for actuation, and the hydraulic pump P2 is a hydraulic pump for control. The hydraulic pumps P1 and P2 are driven by power from the electric motor 9.

The hydraulic pump P1 (hydraulic pump for actuation) suctions hydraulic fluid stored in the hydraulic fluid tank T and delivers the hydraulic fluid toward the control valve unit V. In FIG. 4, a single hydraulic pump P1 (hydraulic pump for actuation) is illustrated for convenience, but this does not imply any limitation. The number of the hydraulic pumps P1 (hydraulic pumps for actuation) may be selected as appropriate to allow hydraulic fluid to be supplied to the hydraulic actuators C1 to C5, travel motors (left travel motor ML and right travel motor MR), and swivel motor MT.

The hydraulic pump P2 (hydraulic pump for control) suctions hydraulic fluid stored in the hydraulic fluid tank T and then delivers the hydraulic fluid, thus outputting hydraulic pressure for signaling, controlling or the like. Specifically, the hydraulic pump P2 (hydraulic pump for control) supplies (delivers) pilot fluid. The number of the hydraulic pumps P2 (hydraulic pumps for control) may also be selected appropriately.

The control valve unit V includes multiple control valves V1 to V8. The control valves V1 to V8 control (adjust) the flow rate of hydraulic fluid outputted from the hydraulic pumps P1 and P2 to the hydraulic actuators C1 to C5, the left travel motor ML, the right travel motor MR, and the swivel motor MT.

Specifically, the control valve V1 (swing control valve) controls the flow rate of hydraulic fluid to be supplied to the hydraulic actuator C1 (swing cylinder). The control valve V2 (boom control valve) controls the flow rate of hydraulic fluid to be supplied to the hydraulic actuator C2 (boom cylinder). The control valve V3 (arm control valve) controls the flow rate of hydraulic fluid to be supplied to the hydraulic actuator C3 (arm cylinder). The control valve V4 (bucket control valve) controls the flow rate of hydraulic fluid to be supplied to the hydraulic actuator C4 (bucket cylinder). The control valve V5 (dozer control valve) controls the flow rate of hydraulic fluid to be supplied to the hydraulic actuator C5 (dozer cylinder). The control valve V6 (left travel control valve) controls the flow rate of hydraulic fluid to be supplied to the left travel motor ML. The control valve V7 (right travel control valve) controls the flow rate of hydraulic fluid to be supplied to the right travel motor MR. The control valve V8 (swivel control valve) controls the flow rate of hydraulic fluid to be supplied to the swivel motor MT.

The operating valves PV1 to PV6 are actuated according to the operation of operating levers 5a (FIG. 1) of the operating device 5. In proportion to the amount by which the operating valve(s) PV1 to PV6 is/are actuated (operation amount of the operating valves PV1 to PV6), pilot fluid acts on the control valve(s) V1 to V8, thus moving the spool(s) of the control valve(s) V1 to V8. Then, hydraulic fluid in an amount proportional to the amount by which the spool(s) of the control valve(s) V1 to V8 is/are moved is supplied to the to-be-controlled hydraulic actuator(s) C1 to C5, left travel motor ML, right travel motor MR, and/or the swivel motor MT. Furthermore, the hydraulic actuator(s) C1 to C5, the left travel motor ML, the right travel motor MR, and/or the swivel motor MT is/are driven according to the supply amount of hydraulic fluid from the control valve(s) V1 to V8.

In other words, hydraulic fluid (pilot fluid) acting on the control valve(s) V1 to V8 is adjusted by operating the operating lever(s) 5a, so that the control valve(s) V1 to V8 is/are controlled. With this, the amount of hydraulic fluid supplied from the control valve(s) V1 to V8 to the hydraulic actuator(s) C1 to C5, the left travel motor ML, the right travel motor MR, and/or the swivel motor MT is adjusted, so that the driving and stopping of the hydraulic actuator(s) C1 to C5, the left travel motor ML, the right travel motor MR, and the swivel motor MT are controlled.

The fluid passage 50 includes a hose or a tube made of a material such as, for example, metal. The fluid passage 50 is a flow path that connects elements (hydraulic devices) in the hydraulic circuit K and allows hydraulic fluid or pilot fluid to flow to the element(s). The fluid passage 50 includes a first fluid passage 51, a second fluid passage 52, a first suction passage 54, a second suction passage 55, and a restriction fluid passage 57.

The first suction passage 54 is a flow path to allow hydraulic fluid suctioned from the hydraulic fluid tank T by the hydraulic pump P1 (hydraulic pump for actuation) to flow therein. The second suction passage 55 is a flow path to allow hydraulic fluid suctioned from the hydraulic fluid tank T by the hydraulic pump P2 (hydraulic pump for control) to flow therein.

The first fluid passage 51 is a flow path to allow hydraulic fluid delivered by the hydraulic pump P1 (hydraulic pump for actuation) to flow toward the control valves V1 to V8 of the control valve unit V. The first fluid passage 51 branches into multiple branches in the control valve unit V and connected to the control valves V1 to V8.

The second fluid passage 52 includes flow path(es) to allow hydraulic fluid having passed through the control valves V1 to V8 to flow toward the hydraulic fluid tank T. The hydraulic fluid tank T stores hydraulic fluid. The second fluid passage 52 includes shuttle fluid passage(s) 52a and a drain passage 52b.

A plurality of the shuttle fluid passages 52a are provided such that each of the control valves V1 to V8 is connected to a corresponding one of the to-be controlled hydraulic actuators C1 to C5, left travel motor ML, right travel motor MR, and swivel motor MT by a pair of the shuttle fluid passages 52a. Each shuttle fluid passage 52a is a flow path to supply hydraulic fluid from a connected one of the control valves V1 to V8 to a connected one of the hydraulic actuators C1 to C5, left travel motor ML, right travel motor MR, and swivel motor MT, and from the one of the hydraulic actuator C1 to C5, left travel motor ML, right travel motor MR, and swivel motor MT back to the one of the control valves V1 to V8. One end of the drain passage 52b branches into multiple branches and connected to the control valves V1 to V8. The opposite end of the drain passage 52b is connected to the hydraulic fluid tank T.

A portion of hydraulic fluid having flowed through the first fluid passage 51 to one of the control valves V1 to V8 passes through the one of the control valves V1 to V8 to one of the shuttle fluid passages 52a, and is supplied to a to-be-controlled one of the hydraulic actuators C1 to C5, left travel motor ML, right travel motor MR, and swivel motor MT. Then, hydraulic fluid discharged from the one of the hydraulic actuators C1 to C5, left travel motor ML, right travel motor MR, and swivel motor MT flows through the other of the shuttle fluid passages 52a back to the connected one of the control valves V1 to V8, passes through the one of the control valves V1 to V8, and flows to the drain passage 52b.

The other portion of the hydraulic fluid having flowed through the first fluid passage 51 to one of the control valves V1 to V8 flows through the one of the control valves V1 to V8 to the drain passage 52b without being supplied to the hydraulic actuators C1 to C5, the left travel motor ML, the right travel motor MR or the swivel motor MT. The drain passage 52b is provided with an oil cooler 37. The oil cooler 37 cools hydraulic fluid having flowed from any of the control valves V1 to V8 through the drain passage 52b.

The hydraulic fluid cooled by the oil cooler 37 returns to the hydraulic fluid tank T through the drain passage 52b. As mentioned above, the fluid passages 54, 51, and 52 are arranged to allow hydraulic fluid to circulate through the hydraulic fluid tank T, hydraulic pump P1, and control valves V1 to V8 of the control valve unit V (a portion of hydraulic fluid circulates also through the hydraulic actuators C1 to C5, the left travel motor ML, the right travel motor MR, and the swivel motor MT).

The restriction fluid passage 57 is a flow path to allow hydraulic fluid delivered by the hydraulic pump P2 (hydraulic pump for control) to flow to the operating valves PV1 to PV6. One end of the restriction fluid passage 57 is connected to the hydraulic pump P2 (hydraulic pump for control), and the opposite end branches into multiple branches and connected to the ports on the primary side (primary ports) of the operating valves PV1 to PV6.

The restriction fluid passage 57 is provided with an unloading valve 58. The unloading valve 58 prohibits or restricts the drive of the hydraulic actuators C1 to C5, the left travel motor ML, the right travel motor MR, and the swivel motor MT, i.e., the drive of the working device 20, by cutting off the supply of hydraulic fluid from the hydraulic pump P1 (hydraulic pump for actuation) to the hydraulic actuators C1 to C5, the left travel motor ML, the right travel motor MR, and the swivel motor MT.

Specifically, the unloading valve 58 is switched between a supply position and a blocking position by the operator operating the unloading lever 5b. Once the unloading valve 58 has switched to the supply position, hydraulic fluid having been delivered by the hydraulic pump P2 (hydraulic pump for control) into the restriction fluid passage 57 is supplied to the operating valves PV1 to PV6, allowing the operation of the control valves V1 to V8. This also allows the operation of the hydraulic actuators C1 through C5, the left travel motor ML, the right travel motor MR, the swivel motor MT, the working device 20, and the traveling device 10. The hydraulic fluid discharged from the operating valves PV1 to PV6 returns to the hydraulic fluid tank T through another drain passage (not shown).

On the contrary, once the unloading valve 58 has switched to the blocking position, hydraulic fluid having been delivered by the hydraulic pump P2 (hydraulic pump for control) into the restriction fluid passage 57 is drained to the hydraulic fluid tank T, and is no longer supplied (stops being supplied) to the operating valves PV1 to PV6, and the operation of the control valves V1 to V8 is prohibited or restricted. With this, the operation of the hydraulic actuators C1 to C5, the left travel motor ML, the right travel motor MR, the swivel motor MT, the working device 20, and the traveling device 10 is also prohibited or restricted.

Next, the layout of the interior of the machine body 2 of the electric working machine 1 is described.

FIG. 5 illustrates an example of the layout of the interior of the machine body 2 of the electric working machine 1. FIG. 5 shows the interior of the machine body 2 as viewed from above. In the machine body 2, the control valve unit V is located in front of the swivel bearing 3 (downstream in direction A1). The hydraulic fluid tank T is located to the right of the swivel bearing 3 and above the hydraulic actuator C1 (swing cylinder). A partition 80 is provided behind (downstream in backward direction A2) of the swivel bearing 3 such that the partition 80 is parallel to the width direction of the machine body 2. The partition 80 divides the interior space of the machine body 2 into front and rear sections.

A rear room R is located behind the partition 80 (downstream in direction A2). The battery unit 30, the inverter 38, the junction box 39, the DC-DC converter 40, the hydraulic pumps P1 and P2, the electric motor 9, the radiator 35, the oil cooler 37, and/or the like are located in the rear room R.

The batteries 31 and 32 of the battery unit 30 are arranged along the width direction of the machine body 2. The inverter 38, the junction box 39, and the DC-DC converter 40 are located above the batteries 31 and 32.

The hydraulic pumps P1 and P2, the electric motor 9, the radiator 35, and the oil cooler 37 are located to the right of the battery unit 30. The electric motor 9 is located behind the hydraulic pumps P1 and P2. The radiator 35 is located above the electric motor 9. The heat exchanger 35b of the radiator 35 is located closer to the battery unit 30 than the radiator fan 35f is. The oil cooler 37 is located above the hydraulic pumps P1 and P2. The heat exchanger 37b of the oil cooler 37 is located closer to the battery unit 30 than the oil cooler fan 37f is.

The partition 80 has a plurality of through holes 81, 82, and 83. The through holes 81, 82, and 83 are for insertion of, for example, hoses (not shown) which are the fluid passage 50, electrical wire(s), and/or the like. The through holes 81, 82, and 83 may also be used as vents. The protection structure 6 (operator cab 4R) is provided above the machine body 2.

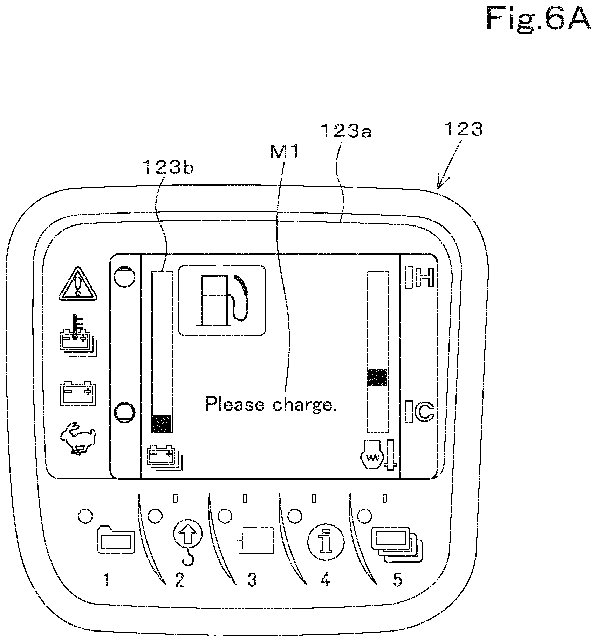

The following describes a process of charging the electric working machine 1 using the external fast charger 200, and the like. Assume here that the BMU 31b has determined that the detected value of the remaining charge in the battery 31 is below a predetermined value and outputted, to the controller 7, a low charge signal indicating that remaining charge in the battery 31 is low. Assume also that the detected value of the remaining charge in the battery 32 is above the predetermined value and that the BMU 32b has not outputted a low charge signal to the controller 7. Based on the low charge signal from the BMU 31b, the controller 7 causes the display 123 of the electric working machine 1 to display a message M1 suggesting charging, as shown in FIG. 6A. The message M1 is, for example, a message asking the user to perform charging.

The display 123 includes a coolant temperature indicator 123a, as shown in FIG. 6A. The coolant temperature indicator 123a indicates the temperature of coolant detected by the water temperature detector 49.

The display 123 also includes a remaining battery level indicator 123b, as shown in FIG. 6A. The remaining battery level indicator 123b indicates the remaining charge level of the battery unit 30 (e.g., batteries 31 and 32) detected at the BMU 31b. For example, the remaining battery level indicator 123b indicates a lower one of the remaining charge levels of the batteries 31 and 32. It is noted here that the remaining charge level of the battery 31 is indicated because the remaining charge level of the battery 31 is low. Note that the remaining battery level indicator 123b may selectively indicate the remaining charge level of the battery 31 or 32 according to the selection made via the operating device 5. The remaining battery level indicator 123b may indicate the remaining charge level of the combination of the batteries 31 and 32.

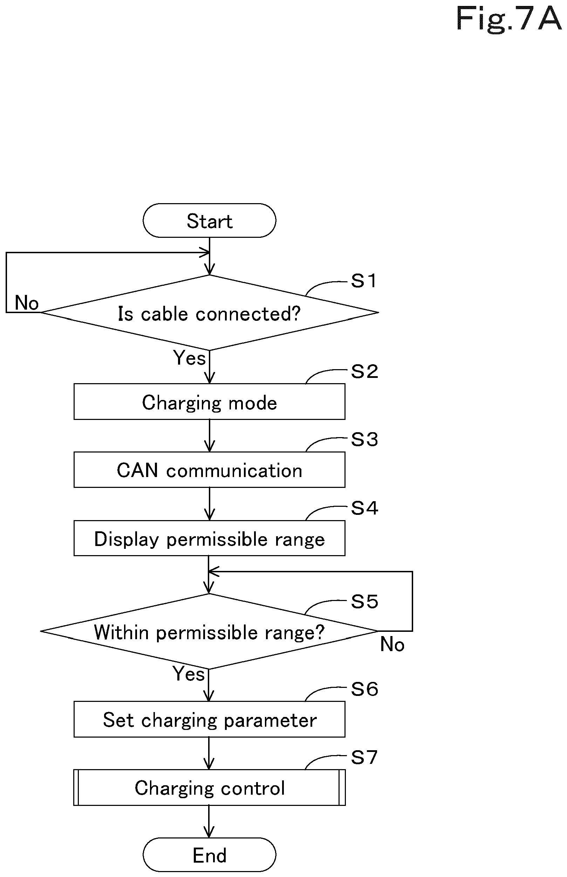

Upon receipt of the low charge signal from the BMU 31b, the controller 7 performs a charging start process as shown in FIG. 7A. FIG. 7A is a flowchart showing an example of the charging start process to charge the electric working machine 1 using the external fast charger 200. Specifically, the CPU 7a of the controller 7 in FIG. 1 executes control program(s) stored in advance in the storing unit 7b, so that the controller 7 starts the charging start process as shown in FIG. 7A.

The controller 7 determines whether or not a charging cable is connected (S1). The operator ensures that the external fast charger 200 and the electric working machine 1 are connected by the charging cable 201, as shown in FIG. 2. Specifically, the operator connects the connector 202 of the charging cable 201, which is connected to the external fast charger 200, to the charging port 41 of the electric working machine 1.

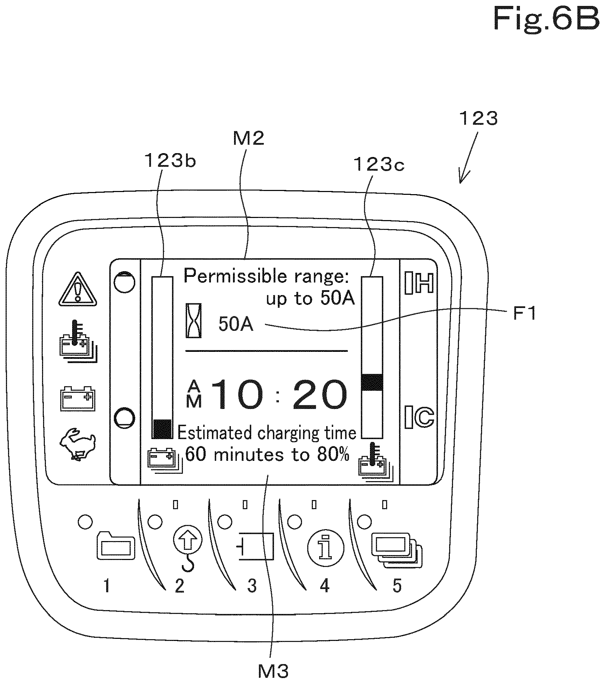

The connection detector 41a outputs a connection detection signal to the controller 7 when the charging cable 201 is connected to the charging port 41, and does not output a connection detection signal to the controller 7 when the charging cable 201 is not connected to the charging port 41. The controller 7 selects a charging mode when the charging cable 201 is connected to the charging port 41 (Yes in S1) (S2). The controller 7, for example, causes the display 123 to display a charging mode screen as shown in FIG. 6B. Once the controller 7 has selected the charging mode, the controller 7 causes the display 123 to display the battery temperature indicator 123c as shown in FIG. 6B instead of the coolant temperature indicator 123a as shown in FIG. 6A. The battery temperature indicator 123c indicates the temperature of the battery unit 30 (e.g., battery 31) detected by the BMU 31b. It is noted here that the remaining charge level of the battery 31 is shown because the remaining charge level of the battery 31 is low.

On the contrary, if the charging cable 201 is not connected to the charging port 41 (No in S1), the controller 7 returns to S1 and waits until the charging cable 201 is connected.

After S2, the controller 7 performs controller area network (CAN) communication with the external fast charger 200 (S3).

Specifically, the fast charger 200 transmits a charging start signal to the electric working machine 1 through the analog line 201c of the charging cable 201. Upon receipt of the charging start signal from the fast charger 200, the controller 7 of the electric working machine 1 starts CAN communication through the CAN signal line 201b and sends information about the battery 31 (e.g., maximum voltage, remaining charge level, maximum charging time of the battery 31) to the fast charger 200 through the CAN signal line 201b. The fast charger 200 sends charger information (e.g., maximum voltage, maximum electric current (e.g., 125 A), error threshold) to the electric working machine 1 through the CAN signal line 201b. The controller 7 of the electric working machine 1 evaluates the suitability of the fast charger 200 (determines whether the fast charger 200 is suitable for charging the battery 31) based on the charger information. If the controller 7 determines that the fast charger 200 is suitable for charging the battery 31, the controller 7 transmits a ready signal to the fast charger 200 via the analog line 201c. Upon receipt of the ready signal, the fast charger 200 performs insulation diagnosis, and, if the result of the insulation diagnosis is good, transmits a charging enabling signal to the electric working machine 1 via the analog line 201c.

After S3, the controller 7 causes the display 123 to display the permissible range of the charging parameter (S4). Specifically, the BMU 31b decides the permissible range of the charging parameter based on the status of the battery 31 (e.g., the temperature of battery 31). For example, in a case that the charging parameter is electric current value, if the temperature of the battery 31 is a first temperature sufficiently lower than the use limit temperature of the battery 31 (e.g., low temperature), the BMU 31b sets the permissible range of the charging parameter to a first permissible range with a first value (for example, an electric current value of 50 A) being the upper limit, and if the temperature of the battery 31 is a second temperature lower than the use limit temperature of the battery 31 but higher than the first temperature (e.g., medium temperature), the BMU 31b sets the permissible range of the charging parameter to a second permissible range with a second value (for example, an electric current value of 30 A) being the upper limit. The controller 7 acquires the permissible range of the charging parameter set by the BMU 31b. Assume here that the permissible range of the charging parameter is set to the first permissible range with the first value (e.g., an electric current value of 50 A) being the upper limit. The controller 7 then acquires the permissible range of the charging parameter set by the BMU 31b and causes the display 123 to display the permissible range. The controller 7 causes the display 123 to display a message M2 (the message "permissible range: up to 50 A") indicating the permissible range of the charging parameter, as shown in FIG. 6B.

After S4, the controller 7 determines whether or not the charging parameter set via the operating switch 5c1 is included in the permissible range (S5). The controller 7 causes the display 123 to display, in in a display field F1, the charging parameter (for example, electric current value) set via the operating switch 5c1. If the charging parameter (for example, electric current value) displayed in the display field F1 is included in the permissible range (Yes in S5), the controller 7 accepts the setting of the charging parameter (S6) and outputs the charging parameter to the fast charger 200. Since the permissible range here is set to the first permissible range with the first value (e.g., an electric current value of 50 A) being the upper limit, if the charging parameter set via the operating switch 5c1 indicates an electric current value of 50 A or less, then the controller 7 accepts the setting of the charging parameter. Assume here that an electric current value of 50 A has been set as the charging parameter by the operation of the operating switch 5c1 and is displayed in the display field F1 of the display 123.

On the contrary, if the charging parameter set via the operating switch 5c1 is not included in the permissible range (No in S5), the controller 7 does not output the charging parameter, and causes the display 123 to display a prompt asking for re-setting and returns to S5. For example, if an electric current value exceeding 50 A (e.g., 100 A) is set via the operating switch 5c1, the controller 7 causes the display 123 to display a notice message stating that "Please set electric current value of 50 A or less", and does not output the charging parameter indicating an electric current value of 100 A to the fast charger 200.

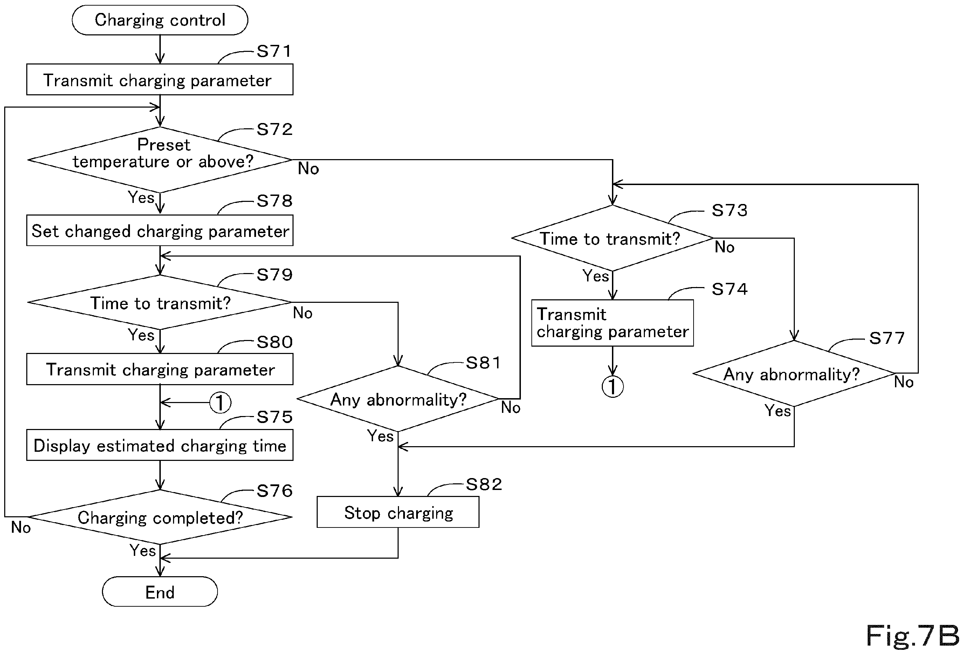

After S6, the controller 7 performs charging control (S7). The charging control (S7) is described with reference to FIG. 7B. FIG. 7B is a flowchart showing an example of the charging control for the electric working machine.

The controller 7 transmits, to the fast charger 200 through the CAN signal line 201b, an electric current value of 50 A which is the charging parameter set by the operation of the operating switch 5c1 in S6 (S71).

The controller 7 determines whether or not the value of the temperature of the battery 31 detected by the BMU 31b is equal to or above a preset temperature that is lower than the use limit temperature of the battery 31 (S72). If the value of the temperature of the battery 31 is less than the preset temperature (No in S72), the controller 7 determines whether or not now is the time for transmission (S73). The time for transmission is after a predetermined period of time (e.g., 100 ms) from the last transmission of the charging parameter (in this case, an electric current value of 50 A), and comes repeatedly on a periodic basis. The counter function of the controller 7 allows detection of each time for transmission. If now is the time for transmission (Yes in S73), the controller 7 transmits the charging parameter (also an electric current value of 50 A) to the fast charger 200 through the CAN signal line 201b (S74).

On the contrary, if now is not the time for transmission (No in S73), the controller 7 determines whether or not the status of the battery 31 detected by the BMU 31b is abnormal (S77). Abnormalities of the status of the battery 31 include, for example, abnormal temperature, abnormal electric current, and abnormal voltage of the battery 31. The controller 7 returns to S73 if the status of the battery 31 detected by the BMU 31b is not abnormal (No in S77).

If the status of the battery 31 is abnormal (Yes in S77), the controller 7 transmits a charging stop request to the fast charger 200 through the CAN signal line 201b to stop the DC electric current outputted by the fast charger 200 to stop charging (S82). At S82, the controller 7 may cause the display 123 to display a message indicating that the charging has been stopped. After S82, the controller 7 ends this process.

It is noted that, after S74, the controller 7 causes the display 123 to display the estimated charging time calculated by the BMU 31b (S75). Assume here that the target charging level (e.g., 80%) of the battery 31 is predetermined. Specifically, the BMU 31b calculates the estimated charging time using the target charging level of the battery 31, the remaining charge level of the battery 31, the charging parameter set via the manual operator 5c, and the charging amount per unit time. For example, the BMU 31b calculates the difference (e.g., 60%) between the target charging level (e.g., 80%) and the remaining charge level (e.g., 20%). The BMU 31b then calculates the charging amount per unit time using the charging parameter (electric current value of 50 A). Assume here that the charging amount per unit time (e.g., minute) is "1%". The BMU 31b then divides the difference (e.g., 60%) by the charging amount per unit time (1%) to calculate 60 minutes. The controller 7 acquires the estimated charging time (e.g., 60 minutes) calculated by the BMU 31b. The controller 7 causes the display 123 to display the estimated charging time acquired from the BMU 31b. The controller 7 causes the display 123 to display a message M3 (the message "60 minutes to 80%") indicating the estimated charging time, as shown in FIG. 6B.

The controller 7 determines whether or not to end charging based on the status of the battery 31 detected by the BMU 31b (S76). As described above, the target charging level (e.g., 80%) of the battery 31 is predetermined. The controller 7 determines that charging is completed (Yes in S76) when the charge level of the battery 31 reaches the target charging level (e.g., 80%) (in other words, when the remaining charge level of the battery 31 reaches 80%), and ends this process. Note that, in the case where the target charging time (for example, 60 minutes) of the battery 31 is predetermined, the controller 7 determines that charging is completed (Yes in S76) when the charging time of the battery 31 reaches the target charging time (for example, 60 minutes) and ends this process.

Note that, if the target charging level of the battery 31 is set to, for example, 100%, i.e., full charge, the controller 7 determines that charging is completed (Yes in S76) when the BMU 31b detects that the battery 31 is fully charged (remaining charge level is "100%") and ends this process.

On the contrary, if the charge level of the battery 31 detected by the BMU 31b does not reach the target charging level (e.g., 80%), the controller 7 determines that charging is not completed (No in S76) and returns to S72. Note that, in the case where the target charging level (e.g., 100%) of the battery 31 is predetermined, i.e., the predetermined target charging level is full charge, the controller 7 determines that charging is not completed (No in S76) if the BMU 31b does not detect full charge (remaining charge level of "100%") of the battery 31, and returns to S72.

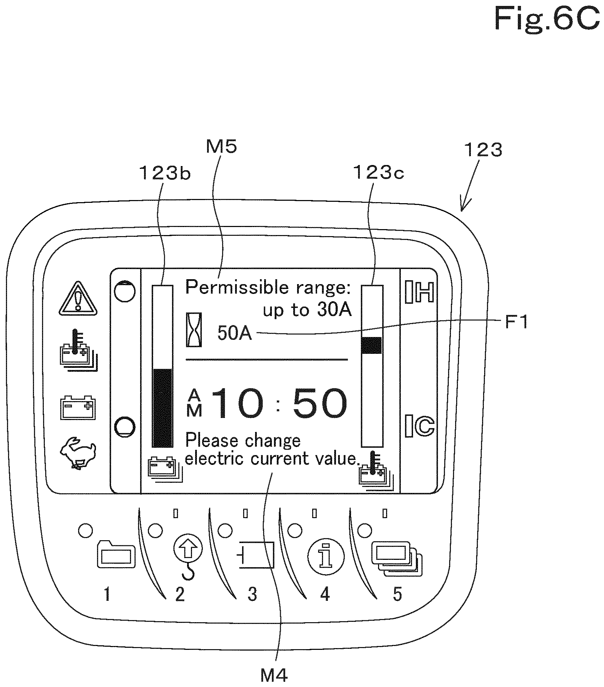

Assume that, for example, about 30 minutes have passed since the start of charging and the temperature of the battery 31 has increased due to the charging by the fast charger 200. As shown in FIG. 6C, the battery temperature indicator 123c shows the temperature of the battery 31 approaching high temperature. In S72, the controller 7 sets a changed charging parameter (S78) if the value of the temperature of the battery 31 is the preset temperature or above (Yes in S72). Specifically, if the value of the temperature of the battery 31 is the preset temperature or above (Yes in S72), the controller 7 causes a message M4 asking for setting a changed charging parameter to be displayed, as shown in FIG. 6C. The message M4 is, for example, the message "Please change electric current value".

If the temperature of the battery 31 is the second temperature (e.g., medium temperature) that is lower than the use limit temperature of the battery 31 but higher than the first temperature, the BMU 31b sets the charging parameter to a second value (e.g., an electric current value of 30 A) and sets the permissible range to the second permissible range with the second value being the upper limit. The controller 7 acquires the permissible range of the charging parameter set by the BMU 31b. Assume here that the permissible range of the charging parameter is set to the second permissible range with the second value (e.g., an electric current value of 30 A) being the upper limit. The controller 7 then acquires the permissible range of the charging parameter set by the BMU 31b and causes the display 123 to display the permissible range. The controller 7 causes the display 123 to display a message M5 (message "Permissible range: up to 30 A") indicating the permissible range of the charging parameter, as shown in FIG. 6C.

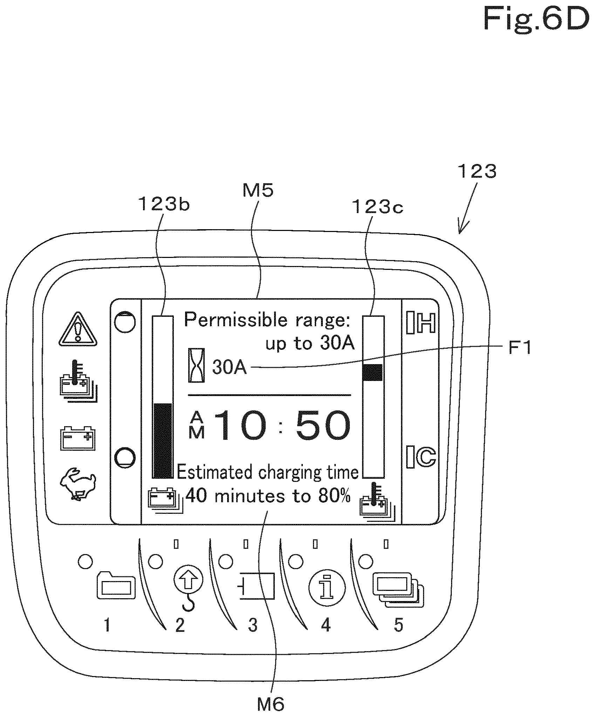

The controller 7 determines whether or not the charging parameter set via the operating switch 5c1 is included in the permissible range. If the charging parameter set via the operating switch 5c1 is included in the permissible range, the controller 7 accepts the setting of the changed charging parameter (S78). Since the permissible range here is set to the second permissible range with the second value (e.g., an electric current value of 30 A) being the upper limit, if the changed charging parameter set via the operating switch 5c1 is an electric current value of 30 A or less, then the controller 7 accepts the setting of the changed charging parameter. Assume here that an electric current value of 30 A is set as the changed charging parameter by the operation of the operating switch 5c1. The controller 7 causes the display 123 to display, in the display field F1, the electric current value of 30 A as the changed charging parameter as shown in FIG. 6D.

Note that, if the changed charging parameter set via the operating switch 5c1 is not included in the permissible range (that is, if an electric current value greater than 30 A is designated), the controller 7 remains at S78 until the changed charging parameter (for example, an electric current value of 30 A or less) included in the permissible range is set.

In S78, the controller 7 allows the changed charging parameter to be set by the operation of the operating switch 5c1 by the operator, but this does not imply any limitation. For example, the controller 7 may set the charging parameter automatically to the upper limit (second value) of the second permissible range (e.g., an electric current value of 30 A) without relying on the operation of the operating switch 5c1 by the operator. In such a case, the operator does not need to go through the trouble of performing setting operations, which is highly convenient.

The controller 7 determines whether or not now is the time for transmission (S79). If now is the time for transmission (Yes in S79), the controller 7 transmits the changed charging parameter (electric current value of 30 A) to the fast charger 200 through CAN signal line 201b (S80).

After S80, the controller 7 causes the display 123 to display the estimated charging time calculated by the BMU 31b (S75). Assume here that the calculated estimated charging time is "45 minutes". The controller 7 acquires the estimated charging time (e.g., 45 minutes) calculated by the BMU 31b. The controller 7 causes the display 123 to display the estimated charging time acquired from the BMU 31b. The controller 7 causes the display 123 to display a message M6 (the message "40 minutes to 80%") indicating the estimated charging time, as shown in FIG. 6D.

On the contrary, if now is not the time for transmission (No in S79), the controller 7 determines whether or not the status of the battery 31 detected by the BMU 31b is abnormal (S81). Abnormalities of the status of the battery 31 include, for example, abnormal temperature, abnormal electric current, and abnormal voltage of the battery 31. The controller 7 returns to S79 if the status of battery 31 detected by the BMU 31b is not abnormal (No in S81).

If the status of the battery 31 is abnormal (Yes in S81), the controller 7 transmits a charging stop request to the fast charger 200 through the CAN signal line 201b to stop the DC electric current output by the fast charger 200 to stop charging (S82). After S82, the controller 7 ends this process.

An electric working machine 1 according to one or more embodiments achieve the following effect(s).

An electric working machine 1 according to one or more embodiments includes an electric motor 9 (electric actuator), a battery unit 30 including a battery 31 to supply electricity to the electric motor 9, a working device 20 to operate using a driving force from the electric motor 9, a charging port 41 (connector) to be connected to an external fast charger 200 via a charging cable 201, a manual operator 5c to be operated to set at least one charging parameter, and a controller 7 to change a value of electric current supplied from the fast charger 200 to the battery unit 30 according to the at least one charging parameter set via the manual operator 5c. With this configuration, it is possible to charge the battery 31 of the battery unit 30 using the electric current value of the fast charger 200 changed based on the at least one charging parameter set via the manual operator 5c. That is, it is possible to perform charging according to the charging parameter(s) designated by the operator, instead of quick charging performed by the external fast charger 200 in a fixed manner. This makes it possible to set the charging parameter(s) that will not hinder work after charging. Thus, since the operator can set appropriate charging parameter(s) corresponding to the state and the manner in which the electric working machine 1 is used, it is possible to reduce the likelihood that the work done by the electric working machine 1 after charging will be hindered.

The manual operator 5c is operable to set at least one charging parameter which is a command for the fast charger 200. The controller 7 outputs the at least one charging parameter set via the manual operator 5c to the fast charger 200. With this configuration, it is possible to cause the fast charger 200 to charge the battery 31 of the battery unit 30 based on the charging parameter which is a command from the electric working machine to the external fast charger 200.

The electric working machine further includes a display 123. The battery unit 30 includes a battery monitor 31b to monitor a status of the battery 31. The battery monitor 31b determines a permissible range of the at least one charging parameter based on the status of the battery 31. The controller 7 causes the display 123 to display the permissible range determined by the battery monitor 31b. The manual operator 5c is operable to set the at least one charging parameter within the permissible range. With this configuration, the permissible range of the at least one charging parameter is displayed on the display 123, allowing the operator to set a charging parameter included in the permissible range. Furthermore, if a charging parameter set via the manual operator 5c is included in the permissible range, the charging parameter is outputted to the fast charger 200, whereas, if the charging parameter is not included in the permissible range, the charging parameter is not outputted and a prompt for setting the charging parameter again is displayed by the display 123. That is, the charging parameter not included in the permissible range is not outputted but a prompt for setting the charging parameter again is displayed. This makes it possible to eliminate the likelihood that inappropriate charging parameters will be set.

The electric working machine further includes a display 123. The battery unit 30 includes a battery monitor 31b to monitor a status of the battery 31. The battery monitor detects at least a temperature of the battery 31 as the status of the battery 31. The controller 7 causes the display123 to display the at least one charging parameter set via the manual operator 5c and the temperature of the battery 31 detected by the battery monitor 31b. The manual operator 5c is operable to change the set at least one charging parameter.

With this configuration, the operator can change the at least one charging parameter while looking at the temperature of the battery 31 displayed on the display 123. In the case where the charging parameter is changed, the fast charger 200 charges the battery 31 of the battery unit 30 according to the changed charging parameter. Therefore, if the temperature of the battery 31 is high, it is possible to prevent or reduce the temperature rise of the battery 31 by reducing the value of the charging parameter. On the contrary, if the temperature of the battery 31 is low, it is possible to reduce the charging time by increasing the value of the charging parameter. That is, it is possible to appropriately change the charging parameter based on the relationship with the temperature of the battery 31.

If the temperature of the battery 31 detected by the battery monitor 31b is equal to or above a preset temperature lower than a use limit temperature of the battery 31, the controller 7 changes the at least one charging parameter set via the manual operator 5c to a changed charging parameter for the temperature of the battery 31 to decrease below the preset temperature. With this configuration, since the battery 31 is charged such that the temperature of the battery 31 is below the preset temperature, it is possible to eliminate the likelihood that the battery 31 will be at the use limit temperature or above at the completion of charging the battery 31. Therefore, it is possible, in the case where the electric working machine 1 performs work immediately after the completion of charging, to reduce the likelihood that a power output restriction will occur due to high temperature. That is, it is possible to make full use of the electric working machine 1 immediately after the battery 31 is charged. For example, with regard to a general electric working machine, when the battery 31 is quickly charged, the battery 31 may be hot (at the use limit temperature) immediately after being charged. If the battery 31 is hot immediately after being charged, a power output restriction is imposed on the electric motor 9, and the operation of the electric working machine is restricted or stopped, resulting in hindering work after charging. In this regard, the electric working machine 1 according to one or more embodiments can prevent such a problem.

The battery monitor 31b calculates an estimated charging time using a target charging level of the battery 31, a remaining charge level of the battery 31, the at least one charging parameter set via the manual operator 5c, and a charging amount per unit time, the estimated charging time being a time taken for the battery 31 to be charged to the target charging level. The controller 7 causes the display 123 to display the estimated charging time. With this configuration, the operator can check the estimated charging time on the display 123.

The battery monitor 31b determines whether or not to stop charging the battery 31 based on at least one of a temperature, electric current, voltage, remaining charge level, or charging time of the battery 31. The controller 7 outputs a charging stop request to the fast charger 200 if the battery monitor 31b determines to stop charging. With this configuration, it is possible to cause the fast charger 200 to stop charging based on the result of monitoring of the status of the battery 31 by the battery monitor 31b.

The electric actuator is an electric motor 9. The electric working machine further includes a hydraulic pump P1 to be driven by the electric motor 9 to deliver hydraulic fluid, a hydraulic device M to be driven by hydraulic fluid from the hydraulic pump P1, and a working device 20 to be actuated by the hydraulic device M. The manual operator 5c is to be used to set a motor rotational speed of the electric motor 9 during a normal period, and used to set the at least one charging parameter during a charging period other than the normal period. With this configuration, the manual operator 5c to be used to set the motor rotational speed can be used also to set the charging parameter(s), eliminating the need for additional components and making it possible to prevent or reduce an increase in parts count.

The controller 7 receives an operation on the manual operator 5c as an operation to set the at least one charging parameter when the charging cable 201 is connected to the charging port 41, and receives the operation on the manual operator 5c as an operation to set the motor rotational speed of the electric motor 9 when the charging cable 201 is not connected to the charging port 41. With this configuration, upon connection of the charging cable 201 to the charging port 41, the manual operator 5c is allowed to set the at least one charging parameter, making it possible to switch the function of the manual operator 5c to the charging parameter setting function without time or effort. On the contrary, upon disconnection of the charging cable 201 from the charging port 41, the manual operator 5c is allowed to set the motor rotational speed of the electric motor 9, making it possible to easily change the function of the manual operator 5c back to the original function (the function of setting the motor rotational speed of the electric motor 9).

The manual operator 5c is an operating switch 5c1 to set the motor rotational speed of the electric motor 9 during a normal period. The operating switch 5c1 is used to set the at least one charging parameter during a charging period other than the normal period. With this configuration, the operating switch 5c1 to set the motor rotational speed can be used also to set the at least one charging parameter, eliminating the need for additional components and making it possible to prevent or reduce an increase in parts count.

Note that, although example cases where the charging parameter set via the manual operator 5c is electric current value are discussed in the present embodiment, this does not imply any limitation. For example, the at least one charging parameter set via the manual operator 5c may include at least one of electric current value, charging time, charging level, or charging speed. In such a case, at least one of electric current value, charging time, charging level, or charging speed (such as high speed, medium speed, low speed etc.) can be set as the at least one charging parameter. This makes it possible to select the content of charging parameter (i.e., at least one of electric current value, charging time, charging level, or charging speed) corresponding to the operator's need and thus possible to improve the degree of freedom of operability.

### Variation 1

An electric working machine 1 according to variation 1 may be configured such that the controller 7 receives an operation on the manual operator 5c as an operation to set the at least one charging parameter when an unloading valve 58 is in a blocking position, and the controller 7 receives the operation on the manual operator 5c as an operation to set the motor rotational speed of the electric motor 9 when the unloading valve 58 is in a supply position. That is, the controller 7 may be configured or programmed to not supply electric current from the fast charger 200 to the battery unit 30 when the unloading valve 58 is in the supply position.

With the configuration of variation 1, electric current is supplied from the fast charger 200 to the battery unit 30 only when the unloading valve 58 is in the blocking position. Specifically, when the unloading valve 58 is in the blocking position, the manual operator 5c is allowed to set the at least one charging parameter, making it possible to switch the function of the manual operator 5c to the charging parameter setting function without time or effort. On the contrary, when the unloading valve 58 is in the supply position, the manual operator 5c is allowed to set the motor rotational speed of the electric motor 9, making it possible to easily change the function of the manual operator 5c back to the original function (the function of setting the motor rotational speed of the electric motor 9).

### Variation 2

An electric working machine 1 according to variation 2 may include a storing unit 7b to store, as the previously set value, a motor rotational speed indicated by the operating switch 5c1 immediately before the setting of the at least one charging parameter is allowed, and may be configured such that the controller 7 causes the display 123 to display the previously set value stored in the storing unit 7b when the operating switch 5c1 is allowed to set the motor rotational speed of the electric motor 9.

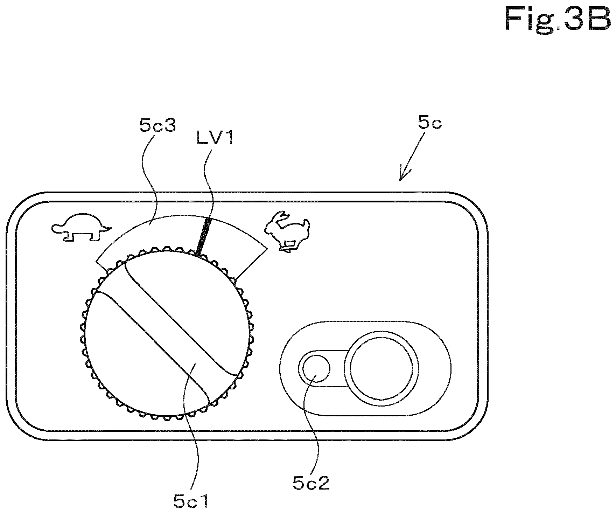

As illustrated in FIG. 3B, the controller 7 causes the display 123 to display a level indicator LV1 which indicates the previously set value stored in the storing unit 7b. That is, the display 123 shows that the operating switch 5c1 was in the position corresponding to the level indicator LV1 when the motor rotational speed of the electric motor 9 was set.

With the configuration of variation 2, it is possible, when the function of the operating switch 5c1 changes back from the charging parameter setting function to the function of setting the motor rotational speed of the electric motor 9 (i.e., original function), to notify the operator of the originally set value of the motor rotational speed (previously set value), and thus possible to support the operator when using the operating switch 5c1 with the original function.

### Variation 3

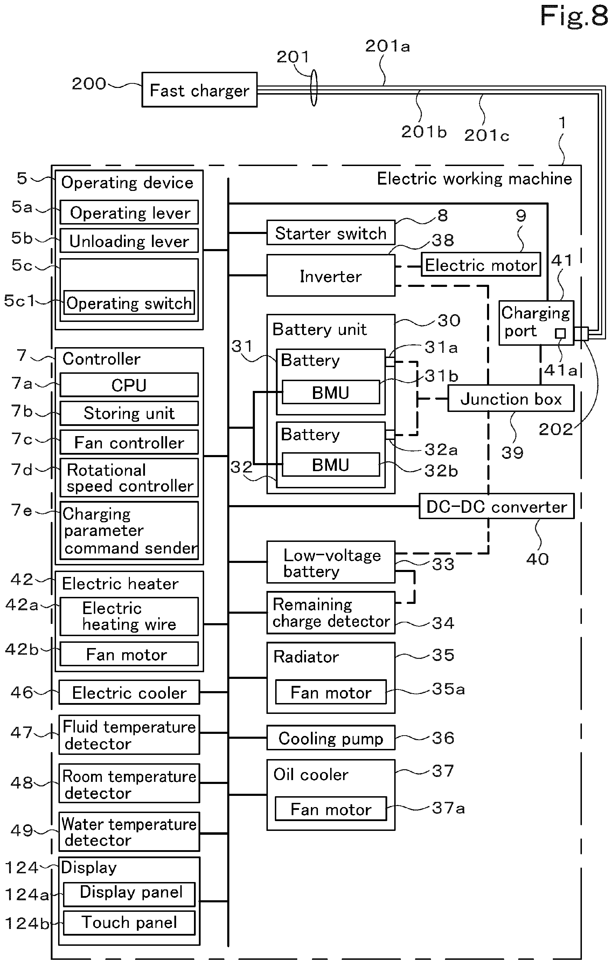

FIG. 8 illustrates an electric working machine 1 according to variation 3. FIG. 8 is an electrical block diagram of the electric working machine 1 according to variation 3. The electric working machine 1 according to variation 3 is such that the manual operator 5c is a display 124 including a display panel 124a and a touch panel 124b located on a front side of the display panel 124a, the motor rotational speed of the electric motor 9 can be set during a normal period, and the at least one charging parameter can be set during a charging period other than the normal period. For example, the display 124 may be the display 123 as illustrated in FIGS. 6A to 6D that has a touch panel function and that is configured to display a graphical indication corresponding to the operating switch 5c1.

With the electric working machine 1 according to variation 3, the display 124 having the touch panel function can be used not only to set the motor rotational speed but also to set the at least one charging parameter, providing good operability.

### Variation 4

An electric working machine 1 according to variation 4 is such that the controller 7 stops the supply of electricity from the battery 31 to the electric motor 9 (electric actuator) while the fast charger 200 supplies electric current to the battery unit 30. For example, upon the connection of the charging cable 201 to the charging port 41, the controller 7 causes the display 123 to display a selection screen for selection of a charging mode, and, upon selection of the charging mode, stops the electric motor 9 and keeps the electric motor 9 in the stopped state until the charging mode ends.

With the electric working machine 1 according to variation 4, it is possible to ensure safety during the battery charging period. For example, upon the connection of the charging cable 201 to the charging port 41, the controller 7 causes the display 123 to display a selection screen for selection of a charging mode, and, upon selection of the charging mode, stops the electric motor 9 and keeps the electric motor 9 in the stopped state until the charging mode ends. In such a case, after the electric motor 9 is stopped, the battery 31 of the battery unit 30 starts being charged, and the electric motor 9 is kept in the stopped state during the charging mode. This makes it possible to eliminate or reduce the likelihood that the electric working machine 1 will operate during the charging period, and thus possible to ensure safety during the battery charging period.

The foregoing embodiments and variations deal with configurations in which the electric motor 9 is driven by electricity from the battery(batteries) 31, 32, the hydraulic pumps P1, P2 are driven by power from the electric motor 9, the hydraulic actuators C1 to C5, the left travel motor ML, the right travel motor MR, and the swivel motor MT are driven by hydraulic fluid delivered by the hydraulic pumps P1, P2, and the working device 20 and the traveling device 10 are driven by power from the hydraulic actuators C1 to C5, the left travel motor ML, the right travel motor MR, and the swivel motor MT. Note, however, that this does not imply any limitation. For example, one or more or all of the actuators of the working device 20 and the traveling device 10 may be electric actuator(s), the electric actuator(s) may be driven by electricity from the battery(batteries) 31, 32, and the working device 20 and the traveling device 10 may be driven by power from the electric actuator(s). Another example other than the configuration in which all the actuators are electric actuators would be a configuration which includes at least one of an electric motor to drive hydraulic pump(s) or an electric swivel motor.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

In the foregoing embodiments and variations, example cases in which the present invention is applied to an electric working machine 1 such as a backhoe are discussed. The present invention is applicable not only to the electric working machine 1 such as a backhoe but also to, for example, some other construction machine such as a wheel loader, a compact track loader, or a skid-steer loader, as well as an agricultural machine such as a tractor, a combine, a rice transplanter, or a mower.

### Reference Signs List

- 1: Electric working machine
- 5b: Unloading lever
- 5c: Manual operator
- 5c1: Operating switch
- 7: Controller
- 7b: Storing unit
- 9: Electric motor (electric actuator)
- 10: Traveling device (working device)
- 20: Working device
- 30: Battery unit
- 31: Battery
- 31b: BMU (battery monitor)
- 32: battery
- 32b: BMU (battery monitor)
- 41: Charging port
- 58: Unloading valve
- 123: Display
- 124: Display
- 124a: Display panel
- 124b: Touch panel
- 200: Fast charger
- 201: Charging cable
- P1: Hydraulic pump
- M: Hydraulic device

## Claims

1. An electric working machine comprising:
an electric actuator;
a battery unit including a battery to supply electricity to the electric actuator;
a working device to operate using a driving force from the electric actuator;
a connector to be connected to an external fast charger via a charging cable;
a manual operator to be operated to set at least one charging parameter; and
a controller to change a value of electric current supplied from the fast charger to the battery unit according to the at least one charging parameter set via the manual operator.

2. The electric working machine according to claim 1, wherein
the manual operator is operated to set the at least one charging parameter which is a command for the fast charger; and
the controller outputs the at least one charging parameter set via the manual operator to the fast charger.

3. The electric working machine according to claim 1 or 2, further comprising a display, wherein
the battery unit includes a battery monitor to monitor a status of the battery;
the battery monitor determines a permissible range of the at least one charging parameter based on the status of the battery;
the controller causes the display to display the permissible range determined by the battery monitor; and
the manual operator is operable to set the at least one charging parameter within the permissible range.

4. The electric working machine according to any one of claims 1 to 3, further comprising a display, wherein
the battery unit includes a battery monitor to monitor a status of the battery;
the battery monitor detects at least a temperature of the battery as the status of the battery;
the controller causes the display to display the at least one charging parameter set via the manual operator and the temperature of the battery detected by the battery monitor; and
the manual operator is operable to change the set at least one charging parameter.

5. The electric working machine according to claim 4, wherein
if the temperature of the battery detected by the battery monitor is equal to or above a preset temperature lower than a use limit temperature of the battery, the controller changes the at least one charging parameter set via the manual operator to a charging parameter for the temperature of the battery to decrease below the preset temperature.

6. The electric working machine according to any one of claims 3 to 5, wherein
the battery monitor calculates an estimated charging time using a target charging level of the battery, a remaining charge level of the battery, the at least one charging parameter set via the manual operator, and a charging amount per unit time, the estimated charging time being a time taken for the battery to be charged to the target charging level; and
the controller causes the display to display the estimated charging time.

7. The electric working machine according to any one of claims 1 to 6, wherein
the battery unit includes a battery monitor to monitor a status of the battery;
the battery monitor determines whether or not to stop charging the battery based on at least one of a temperature, electric current, voltage, remaining charge level, or charging time of the battery; and
the controller outputs a charging stop request to the fast charger if the battery monitor determines to stop charging.

8. The electric working machine according to any one of claims 1 to 7, wherein
the electric actuator is an electric motor;
the electric working machine further comprises:
a hydraulic pump to be driven by the electric motor to deliver hydraulic fluid;
a hydraulic device to be driven by hydraulic fluid from the hydraulic pump; and
a working device to be actuated by the hydraulic device; and
the manual operator is to be used to set a motor rotational speed of the electric motor during a normal period, and used to set the at least one charging parameter during a charging period other than the normal period.

9. The electric working machine according to claim 8, wherein
the controller:
receives an operation on the manual operator as an operation to set the at least one charging parameter when the charging cable is connected to the connector; and
receives the operation on the manual operator as an operation to set the motor rotational speed of the electric motor when the charging cable is not connected to the connector.

10. The electric working machine according to any one of claims 1 to 9, wherein
the controller stops supply of electricity from the battery to the electric actuator while the fast charger supplies electric current to the battery unit.

11. The electric working machine according to any one of claims 1 to 10, wherein
the electric actuator is an electric motor;
the electric working machine further comprises:
a hydraulic pump to be driven by the electric motor to deliver hydraulic fluid;
a hydraulic device to be driven by hydraulic fluid from the hydraulic pump;
a working device to be actuated by the hydraulic device; and
an unloading valve switchable between a supply position in which hydraulic fluid from the hydraulic pump is supplied to the hydraulic device and a blocking position in which the hydraulic fluid from the hydraulic pump is not supplied to the hydraulic device; and
the controller does not supply electric current from the fast charger to the battery unit when the unloading valve is in the supply position.

12. The electric working machine according to any one of claims 1 to 11, wherein the at least one charging parameter set via the manual operator includes at least one of an electric current value, charging time, charging amount, or charging speed.

13. A charging system for an electric working machine, the charging system comprising:
the electric working machine according to any one of claims 1 to 12; and
a fast charger to change a value of electric current supplied via the charging cable to the electric working machine according to a command from the electric working machine.
